# EUROPEAN PATENT APPLICATION

(11) **EP 4 368 420 A1**
(43) Date of publication of application: **15.05.2024**
(21) Application number: 23208724.7
(22) Date of filing: 09.11.2023
(51) Int. Cl.: B60C 23/04

(54) **A TIRE MONITORING DEVICE**

(30) Priority: 11.11.2022 GB 202216869
(71) Applicant: Airbus Operations Limited, Bristol BS34 7PA (GB)
(72) Inventor: BILL, Andrew, Bristol, BS34 7PA (GB)
(74) Representative: EIP

(57) **Abstract**

Disclosed is a tire monitoring device (10) including a pressure sensor (19), a controller (12), and a memory (14). The controller (12) is configured to control the tire monitoring device (10) to selectively be in a configuration mode, in which the tire monitoring device (10) is open to receiving configuration data (20), and an operational mode, in which received configuration data (20) is stored in the memory and the tire monitoring device cannot receive further configuration data. The controller (19) is configured to transition the tire monitoring device (10) between the configuration mode and the operational mode in response to a change in pressure sensed by the pressure sensor (19).

## Description

### TECHNICAL FIELD

The present invention relates to a tire monitoring device, and a method of configuring a tire monitoring device.

### BACKGROUND

Checking tire pressure is an important part of the maintenance of a vehicle. Tire pressures should be maintained at predetermined pressures to ensure that a tire performs as intended by the manufacturer. Incorrect tire pressure can lead to a tire failing, perhaps bursting and causing damage to the vehicle and/or a loss of control.

### SUMMARY

A first aspect of the present invention provides a tire monitoring device comprising: a pressure sensor; a controller; and a memory; wherein the controller is configured to control the tire monitoring device to selectively be in a configuration mode, in which the tire monitoring device is open to receiving configuration data, and an operational mode, in which received configuration data is stored in the memory and the tire monitoring device cannot receive further configuration data, and the controller is configured to transition the tire monitoring device between the configuration mode and the operational mode in response to a change in pressure sensed by the pressure sensor.

By transitioning the tire monitoring device between the configuration and operational modes in response to a change in pressure sensed by the pressure sensor, the need to send an electronic signal, for example from a remote device, to trigger such a transition between modes may be obviated. This may provide increased security relative to, for example, a system where a remote device is required to trigger the transition between modes, as a pressure change rather than a remote signal is required to transition between configuration and operational modes.

Use of a pressure change to transition between the configuration and operational modes may also enable an operator to trigger the transition without use of an intermediate device.

Optionally, the controller is configured to transition the tire monitoring device between the configuration and operational modes in response to a change in pressure caused by connecting the tire monitoring device to, or disconnecting the tire monitoring device from, a tire.

Optionally, the configuration mode comprises a mode in which the tire monitoring device is unable to communicate with a further tire monitoring device in a network of tire monitoring devices. Optionally, the operational mode comprises a mode in which the tire monitoring device is able to communicate with a further tire monitoring device in a network of tire monitoring devices

Optionally, the pressure sensor is operable to periodically sense a pressure value and store the sensed pressure value in the memory, when in the operational mode.

Optionally, the controller is configured to transition the tire monitoring device from the configuration mode to the operational mode in response to an increase in pressure sensed by the pressure sensor. Optionally, the controller is configured to transition the tire monitoring device from the configuration mode to the operational mode in response to the pressure sensed by the pressure sensor increasing from ambient pressure, for example from 0psi.

Optionally, the controller is configured to transition the tire monitoring device from the operational mode to the configuration mode in response to a decrease in pressure sensed by the pressure sensor, for example in response to the pressure sensed by the pressure sensor decreasing to below a threshold, such as to ambient pressure, for example 0psi.

Optionally, the controller is configured to transition the tire monitoring device from the configuration mode to the operational mode in response to the pressure sensed by the pressure sensor increasing to above a threshold pressure value.

Optionally, the threshold pressure value is at least 45psi. Optionally, the threshold value is at least 100psi.

Optionally, the controller is configured to transition the tire monitoring device from the configuration mode to the operational mode where the pressure sensed by the pressure sensor is above the threshold pressure value for at least a pre-determined time period.

Optionally, the pre-determined time period is at least 3 seconds, at least 5 seconds, or at least 10 seconds.

Optionally, the tire monitoring device comprises an indicator configured to provide an indication to an operator, and the controller is configured to transition the tire monitoring device from the configuration mode to the operational mode in response to an increase in pressure sensed by the pressure sensor whilst the indicator is providing the indication.

Optionally, the indicator is configured to provide the indication in response to an indicator start signal, and the indicator is configured to provide the indication for a time window following the indicator start signal. Optionally the time window is no more than 60 seconds, no more than 45 seconds, no more than 30 seconds, no more than 20 seconds, or no more than 10 seconds.

Optionally, the tire monitoring device is configured to receive the indicator start signal from a remote device, for example a remote device operated by an operator.

Optionally, the tire monitoring device comprises a wireless communication interface for receiving the indicator start signal, the wireless communication interface having a range of 100m or less.

Optionally, the indicator comprises a light source, and the controller is configured to transition the tire monitoring device from the configuration mode to the operational mode in response to an increase in pressure sensed by the pressure sensor whilst the light source is illuminated.

Optionally, the controller is configured to maintain the tire monitoring device in the configuration mode if no increase in pressure is sensed by the pressure sensor whilst the indicator is providing the indication.

Optionally, the controller is configured to control the indicator to, in the operational mode and in response to receipt of a request to confirm the received configuration data stored in the memory, transmit a configuration data signal that encodes the received configuration data stored in the memory.

Optionally, the configuration data signal is configured to be received and/or understood by a human.

Optionally, the configuration data signal is indicative of any of a tire reference pressure, an aircraft wheel location at which the tire pressure monitoring device is intended to be located, and a security code representative of security parameters of the tire pressure monitoring device.

Optionally, the configuration data signal comprises a visual signal, and the visual signal is transmitted using the light source.

Optionally, the tire monitoring device is configured to selectively illuminate the light source to transmit the configuration data signal.

Optionally, the configuration data signal comprises a number, and the selective illumination of the light source comprises encoding the number into an illumination sequence representing individual digits of the number.

Optionally, the tire monitoring device comprises an aircraft tire monitoring device.

A second aspect of the present invention provides an aircraft comprising a tire monitoring device according to the first aspect of the present invention.

A third aspect of the present invention provides a method of configuring a tire monitoring device comprising a pressure sensor and a memory, the method comprising: receiving, at the tire monitoring device, configuration data when the tire monitoring device is in a configuration mode; connecting the tire monitoring device to, or disconnecting the tire monitoring device from, a tire such that the pressure sensor senses a change in pressure; and storing the received configuration data in the memory in response to the sensed change in pressure.

Optionally, the method comprises controlling the tire monitoring device to enter an operational mode, in which the tire monitoring device cannot receive further configuration data, in response to the sensed change in pressure.

Optionally, the method comprises connecting the tire monitoring device to the tire such that the pressure sensor senses an increase in pressure, and storing the received configuration data in the memory in response to the sensed increase in pressure.

Optionally, the method comprises receiving the configuration data when the tire monitoring device is not connected to the tire.

Optionally, the method comprises receiving the configuration data when the tire monitoring device is connected to the tire, and the method comprises disconnecting the tire monitoring device to cause the change in pressure. Optionally, the method comprises reconnecting the tire monitoring device to the tire to cause the change in pressure.

Optionally, the method comprises storing the received configuration data in the memory in response to the pressure sensed by the pressure sensor increasing to above a threshold pressure value. Optionally, the threshold value is at least 45psi. Optionally, the threshold value is at least 100psi. Optionally, the method comprises storing the received configuration data in the memory in response to the pressure sensed by the pressure sensor increasing from ambient pressure, for example from 0psi, to above the threshold pressure value.

Optionally, the method comprises storing the received configuration data in the memory where the pressure sensed by the pressure sensor is above the threshold pressure value for at least a pre-determined time period.

Optionally, the tire monitoring device comprises an indicator, and the method comprises providing an indication to an operator using the indicator, and storing the received configuration data in the memory in response to an increase in pressure sensed by the pressure sensor whilst the indicator is providing the indication.

Optionally, the method comprises providing the indication in response to an indicator start signal, and providing the indication for a time window following the indicator start signal. Optionally the time window is no more than 60 seconds, no more than 45 seconds, no more than 30 seconds, no more than 20 seconds, or no more than 10 seconds.

Optionally, the method comprises receiving the indicator start signal from a remote device, for example a remote device operated by an operator.

Optionally, the tire monitoring device comprises a wireless communication interface for receiving the indicator start signal, the wireless communication interface having a range of 100m or less.

Optionally, the indicator comprises a light source, and the method comprises the storing the received configuration data in the memory in response to an increase in pressure sensed by the pressure sensor whilst the light source is illuminated.

Optionally, method comprises maintaining the tire monitoring device in the configuration mode if no increase in pressure is sensed by the pressure sensor whilst the indicator is providing the indication.

Optionally, the method comprises receiving, at the tire monitoring device a request to confirm the received configuration data stored in the memory, and transmitting, using the indicator, a configuration data signal that encodes the received configuration data stored in the memory.

Optionally, the configuration data signal is configured to be received and/or understood by a human.

Optionally, the configuration data signal is indicative of any of a tire reference pressure, an aircraft wheel location at which the tire pressure monitoring device is intended to be located, and a security code representative of security parameters of the tire pressure monitoring device.

Optionally, the configuration data signal may comprise a visual signal, and the method comprises transmitting the visual signal using the light source.

Optionally, the method comprises selectively illuminating the light source to transmit the configuration data signal.

Optionally, the configuration data signal comprises a number, and the selective illumination of the light source comprises encoding the number into an illumination sequence representing individual digits of the number.

A fourth aspect of the present invention provides a data carrier comprising machine readable instructions for the operation of one or more processors of a controller of a tire monitoring device comprising a pressure sensor and a memory, which, when executed, cause the controller to: control the tire monitoring device to be in a configuration mode, in which the tire monitoring device is open to receiving configuration data; control the tire monitoring device to be an operational mode, in which received configuration data is stored in the memory and the tire monitoring device cannot receive further configuration data; and transition the tire monitoring device between the configuration and operational modes in response to a change in pressure sensed by the pressure sensor.

A fifth aspect of the present invention provides a method of controlling a tire monitoring device comprising a pressure sensor and a memory, the method comprising: controlling the tire monitoring device to be in a configuration mode, in which the tire monitoring device is open to receiving configuration data; controlling the tire pressure sensor to be in an operational mode, in which received configuration data is stored in the memory and the tire monitoring device cannot receive further configuration data; and transitioning between the configuration mode and the operational mode in response to a change in pressure sensed by the pressure sensor.

A sixth aspect of the present invention provides a tire monitoring device comprising a pressure sensor and a memory, the tire monitoring device configured to receive configuration data when the tire monitoring device is in a configuration mode, and configured to store the received configuration data in the memory in response to a change in pressure sensed by the pressure sensor caused by connecting the tire monitoring device to, or disconnecting the tire monitoring device from, a tire.

A seventh aspect of the present invention provides a data carrier comprising machine readable instructions for the operation of one or more processors of a controller of a tire monitoring device comprising a pressure sensor and a memory, which, when executed, cause the tire monitoring device to receive configuration data when the tire monitoring device is in a configuration mode, and to store the received configuration data in the memory in response to a change in pressure sensed by the pressure sensor caused by connecting the tire monitoring device to, or disconnecting the tire monitoring device from, a tire.

### BRIEF DESCRIPTION OF THE DRAWINGS

Embodiments of the invention will now be described, by way of example only, with reference to the accompanying drawings, in which:
Figure 1 shows a schematic view of a tire pressure monitoring device;
Figure 2 shows a schematic view of an aircraft incorporating a number of tire pressure monitoring devices as shown in Figure 1;
Figure 3 shows a schematic view of a network of tire pressure monitoring devices;
Figure 4 shows a flow diagram illustrating a first method of configuring a tire pressure monitoring device;
Figure 5 shows illustrative flashing sequences for LEDs of the tire pressure monitoring devices of Figure 1 to show device location configuration;
Figure 6A shows a user interface for initiating a device location configuration check;
Figure 6B shows a user interface for verifying a signal seen during a device location configuration check;
Figure 7 shows illustrative flashing sequences for LEDs of the tire pressure monitoring devices of Figure 1 to show device reference pressure configuration;
Figure 8A shows a user interface for initiating a device reference pressure first digit configuration check;
Figure 8B shows a user interface for verifying a signal seen during a device reference pressure first digit configuration check;
Figure 8C shows a user interface for initiating a device reference pressure second digit configuration check;
Figure 8D shows a user interface for verifying a signal seen during a device reference pressure second digit configuration check;
Figure 8E shows a user interface for initiating a device reference pressure third digit configuration check;
Figure 8F shows a user interface for verifying a signal seen during a device reference pressure third digit configuration check;
Figure 9 shows a flow diagram illustrating a second method of configuring a tire pressure monitoring device;
Figure 10 shows a flow diagram illustrating a third method of configuring a tire pressure monitoring device;
Figure 11 shows a flow diagram illustrating a fourth method of configuring a tire pressure monitoring device; and
Figure 12 shows a flow diagram illustrating a fifth method of configuring a tire pressure monitoring device.

### DETAILED DESCRIPTION

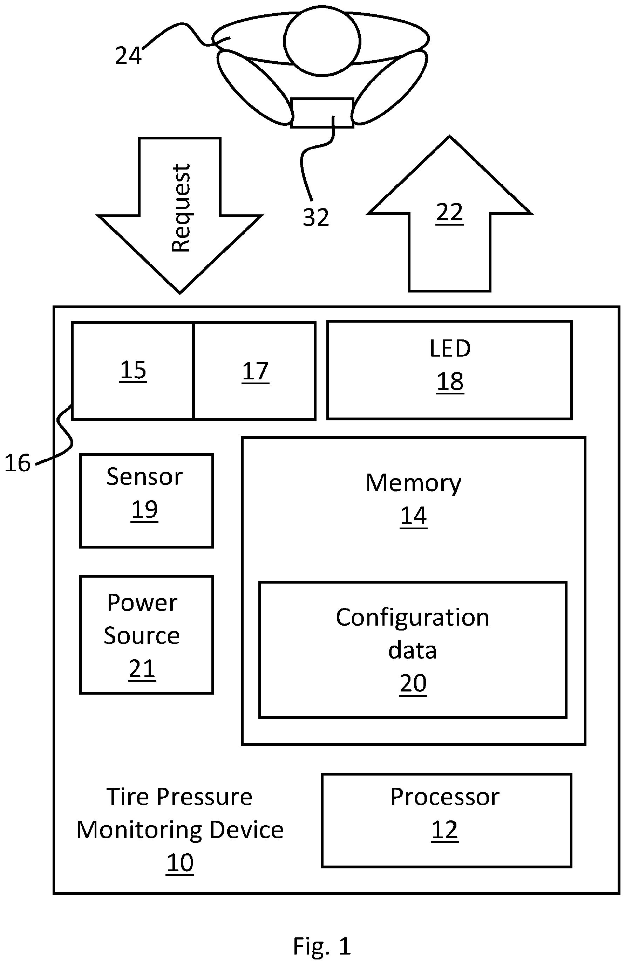

A tire pressure monitoring device 10 according to an example is shown schematically in Figure 1. The tire pressure monitoring device 10 comprises a processor 12, a memory 14, a transceiver 16, a visual indicator or display which is an LED 18 in this example, a pressure sensor 19 and a power source 21. Although the visual indicator here is an LED, in other examples the visual indicator may comprise another appropriate visual indicator such as an LCD screen or the like.

The processor 12 may be any suitable processor including single and multi-core processors, an Application Specific Integrated Circuit (ASIC) or the like. The processor 12 is communicatively coupled to the transceiver 16, the LED 18, the memory 14 and the power source 21. The processor 12 acts as a controller for the tire pressure monitoring device 10.

The memory 14 is a flash memory that stores configuration data 20 and also computer readable instructions for execution by the processor 12 in operation, although it will be appreciated that other types of memory may be used. Details of how the configuration data 20 is stored in the memory 14 will be provided hereinafter. The configuration data 20 can be updated as required with new values, which depend on the aircraft the device is installed on, or other factors. A reference tire pressure is stored in the configuration data 20. Additional data can also be stored in the configuration data 20, for example an aircraft identifier (such as an aircraft tail identifier) and a wheel position.

The transceiver 16 is an appropriate transceiver capable of receiving both the configuration data 20, and a request to confirm the configuration data 20. In this example, the transceiver 16 comprises a first 15 short-range radio signal transceiver operating according to the NFC protocol, and a second 17 transceiver operating according to a Bluetooth ^{®} low energy (BLE) communication protocol. In other examples transceivers operating according to other protocols, for example Wi-Fi, are also envisaged. When the transceiver 16 receives a request to confirm the configuration data 20, the processor 12 encodes the configuration data 20 stored in the memory 14 of the tire pressure monitoring device 10, and transmits a signal 22 indicative of the configuration data 20 via the LED 18 to a user 24 observing the tire pressure monitoring device 10. Here the LED 18 is a three-colour LED which is capable of displaying red, blue, and green coloured light. Other examples may use a different number of colours of light than three and/or use other colours than red, blue, and green. In examples herein, the user 24 is a human. As the user 24 can be taken to be a trusted source, and the tire pressure monitoring device 10 is itself a trusted source, an untrusted device 32 can be used to input the user's verification of the configuration data 20, as will be discussed in more detail hereafter. In other examples the signal may additionally or alternatively take the form of any of a signal displayed on an LCD screen in the form of flashing lights, pictures, or text. In some examples, the signal may comprise any human readable signal, for example any combination of visual and/or audio signals.

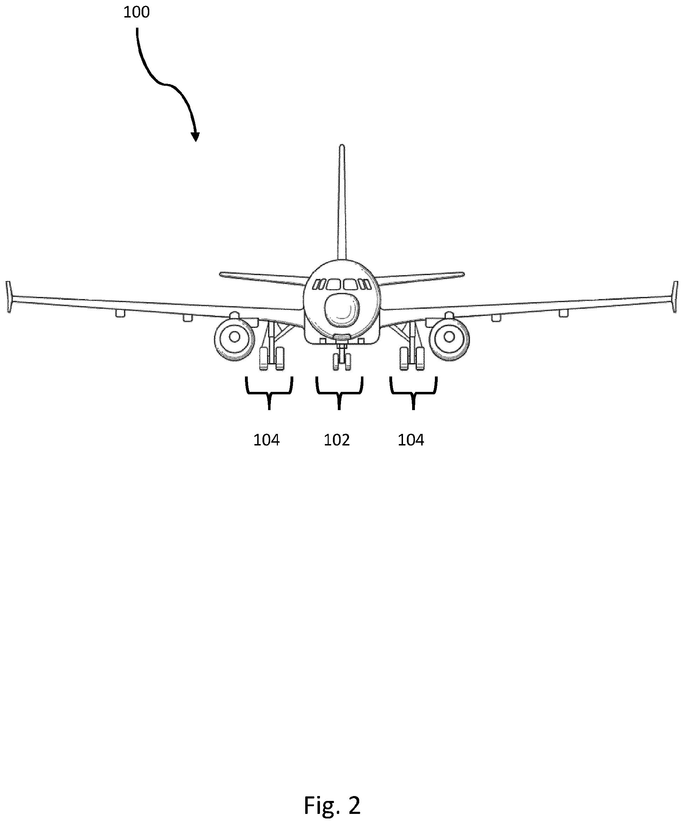

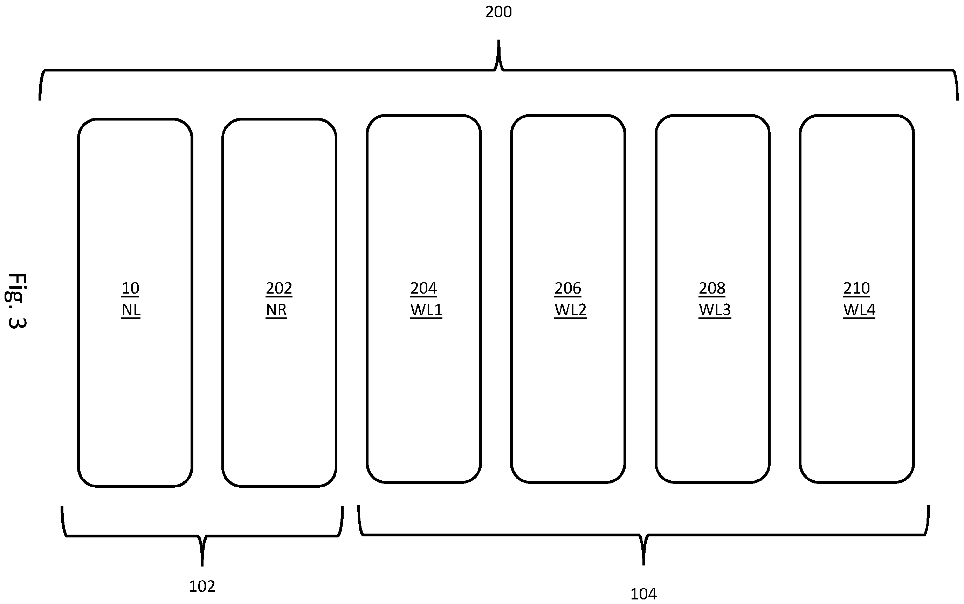

The tire pressure monitoring device 10 is installed on an aircraft 100 in use, and is one of a network 200 of tire pressure monitoring devices, with the aircraft 100 illustrated schematically in Figure 2, and the network 200 of tire pressure monitoring devices illustrated schematically in Figure 3. As an example, the aircraft 100 has a first group 102 of two nose wheels, and a second group 104 of four main landing gear wheels. Each wheel in the first 102 and second 104 groups of wheels has an associated tire pressure monitoring device, such that there are six tire pressure monitoring devices installed on the aircraft 100. It will be appreciated that other numbers and arrangements of wheels, and hence tire pressure monitoring devices, are also envisaged.

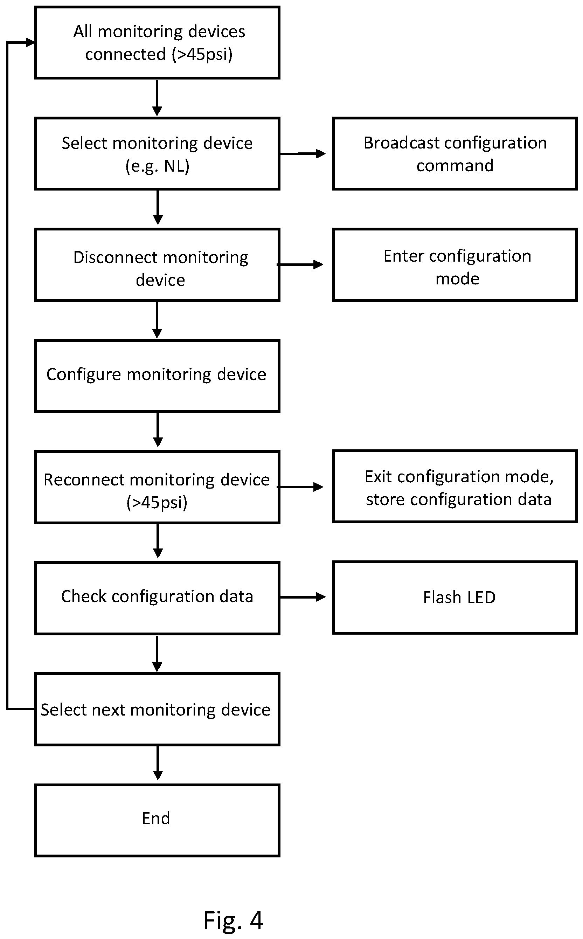

When initially installed on the aircraft 100, the tire pressure monitoring devices 10,202,204,206,208,210 are not configured, i.e. do not store the configuration data 20, and are incapable of direct communication between one another. The user 24 therefore uses the untrusted device 32 to configure the network 200 of tire pressure monitoring devices 10,202,204,206,208,210, as will now be described with reference to Figure 4.

Initially, the tire pressure monitoring devices 10,202,204,206,208,210 are installed on their respective tires on the aircraft 100. The pressure sensor 19 of each tire pressure monitoring device 10,202,204,206,208,210 senses the pressure of the respective tire, which is typically around 178psi, and above a threshold value of 45psi. The user 24 approaches the first tire pressure monitoring device 10 to begin configuration. The user 24 selects, on the untrusted device 32, that the first tire pressure monitoring device 10 is to be configured (which may also be referred to as rigged). The untrusted device 32 broadcasts a configuration command that is used to establish communication with the first tire pressure monitoring device 10.

The user 24 then disconnects the first tire pressure monitoring device 10 from its tire, and the pressure sensor 19 senses a decrease in pressure to below the threshold value, to 0psi. In response to the decrease in pressure, the processor 12 controls the first tire pressure monitoring device 10 to enter a configuration mode. In the configuration mode, the first tire pressure monitoring device 10 is able to receive the configuration data 20 via the transceiver 16.

The user 24 inputs the desired configuration data 20 for the first tire pressure monitoring device 10, including the wheel location and reference pressure, into the untrusted device 32. The configuration data 20 is then transferred from the untrusted device 32 to the first tire pressure monitoring device 10 via a Bluetooth ^{®} low energy protocol using the second transceiver 17. In other examples the configuration data 20 is transferred from the untrusted device 32 to the first tire pressure monitoring device 10 via a near field communication protocol using the first transceiver 15.

Once the configuration data 20 has been transferred to the first tire pressure monitoring device 10, the user 24 reconnects the first tire pressure monitoring device 10 to its tire, and the pressure sensor 19 senses an increase in pressure to above the threshold value. In response to the increase in pressure, the processor 12 controls the first tire pressure monitoring device 10 to store the configuration data 20 in the memory 14, and to exit the configuration mode. The first tire pressure monitoring device 10 enters an operational mode. In the operational mode, the first tire pressure monitoring device 10 is unable to receive further configuration data, and is instead operable to communicate with the other tire pressure monitoring devices 202,204,206,208,210 to fully configure the network 200, and to subsequently conduct tire pressure checks.

When in the operational mode, and whilst still at the first tire pressure monitoring device 10, the user 24 checks that the configuration data 20 that has been stored correctly in the memory 14, with the task being led by an aircraft maintenance manual (AMM).

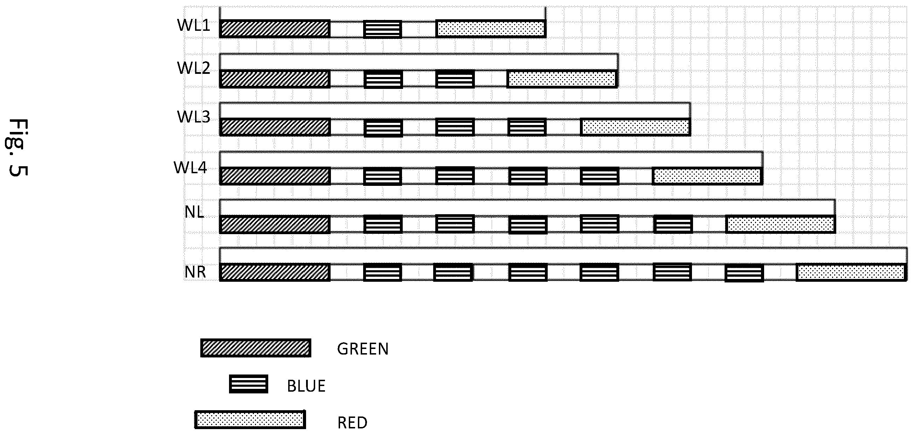

One piece of configuration data 20 to be checked is the installed location of the first tire pressure monitoring device 10. Here, as an example, an AMM task card may provide to the user a list of tire pressure monitoring device locations, e.g. nose left, nose right, and so on, along with an associated expected flash sequence for the LED 18 which would correctly indicate the associated tire pressure monitoring device location. In the case of the first tire pressure monitoring device 10, which is used as the left nose tire pressure monitoring device in the example previously described, an appropriate flash sequence of the LED 18 may be one green flash, followed by five blue flashes, followed by one red flash. Illustrative appropriate flash sequences (i.e. signals 22) for tire pressure monitoring device location are shown schematically in Figure 5.

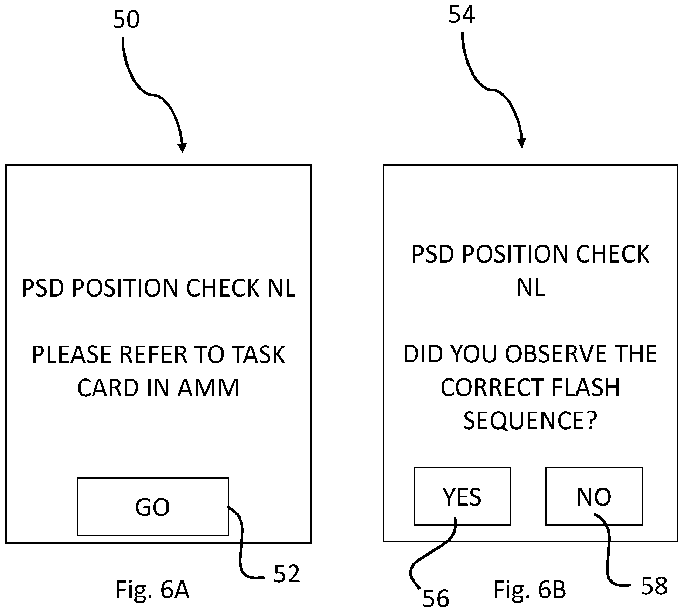

When checking the installed location of the first tire pressure monitoring device 10, the user 24 submits a request for the first tire pressure monitoring device 10 to display the installed location, via the LED 18, using a user interface of the untrusted device 32. The untrusted device 32 does not tell the first tire pressure monitoring device 10 which sequence to flash, but rather provides an instruction for the first tire pressure monitoring device 10 to flash its sequence indicative of the installed location. An exemplary user interface 50 for starting the check is shown in Figure 6A, with the user interacting with user interface element 52 to start the check. An exemplary user interface 54 for a user 24 to verify the signal 22 is shown in Figure 6B, with the user 24 interacting with user interface elements 56,58 to indicate whether the signal 22 is verified or not. If the signal 22, here indicative of installed location of the first tire pressure monitoring device 10, is not verified, then the configuration data 20 needs to be reloaded, with the process described above repeated.

As the user 24 can be taken to be a trusted source, and the first tire pressure monitoring device 10 is itself a trusted source, the untrusted device 32 can be used to input the user's verification of the configuration data 20. The verification can be trusted because it occurs between the user 24 (who is trusted) and tire pressure monitoring device 10 (which is trusted because of its certification to a particular DAL).

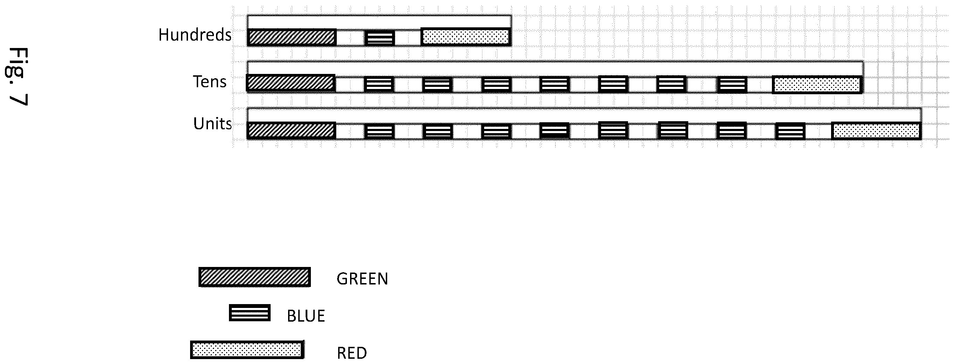

Another piece of configuration data 20 to be checked is the installed reference pressure of the first tire pressure monitoring device 10. Here, as an example, an AMM task card may provide to the user 24 a list of reference pressures for different tire pressure monitoring device locations, e.g., nose left, nose right, and so on, along with an associated expected flash sequence for the LED 18 which would correctly indicate the associated tire pressure monitoring device reference pressure. In the case of the first tire pressure monitoring device 10, which is used as the left nose tire pressure monitoring device in the example previously described, an appropriate reference pressure may be 178 PSI. Here separate flash sequences of the LED 18 may be performed for each digit of the reference pressure, ie a first flash sequence/signal 22 for the "hundreds" digit, a second flash sequence/signal 22 for the "tens" digit, and a third flash sequence/signal 22 for the "units" digit. The first flash sequence of the LED 18 in such a case may be one green flash, followed by one blue flash, followed by one red flash. The second flash sequence of the LED 18 in such a case may be one green flash, followed by seven blue flashes, followed by one red flash. The third flash sequence of the LED 18 in such a case may be one green flash, followed by eight blue flashes, followed by one red flash. Illustrative appropriate flash sequences (i.e. signals 22) for tire pressure monitoring device reference pressure are shown schematically in Figure 7. Here a green flash indicates a start of transmission of the signal, blue flashes indicate informational content of the signal 22, and a red flash indicates an end of transmission of the signal 22.

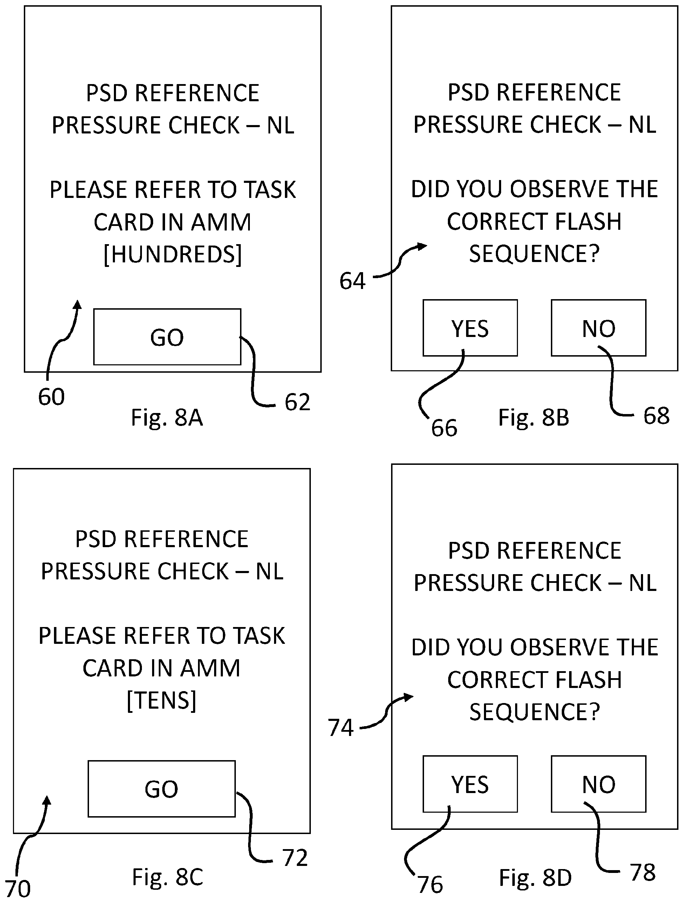

When checking the installed reference pressure of the first tire pressure monitoring device 10, the user 24 submits a request for the first tire pressure monitoring device 10 to display the installed reference pressure, via the LED 18, using a user interface of the untrusted device 32. The untrusted device 32 does not tell the first tire pressure monitoring device 10 which sequence to flash, but rather provides an instruction for the first tire pressure monitoring device 10 to flash its sequence indicative of the installed reference pressure. An exemplary user interface 60 for starting the check for the "hundreds" digit is shown in Figure 8A, with the user 24 interacting with user interface element 62 to start the check for the "hundreds" digit. An exemplary user interface 64 for a user 24 to verify the signal 22 for the "hundreds" digit is shown in Figure 8B, with the user 24 interacting with user interface elements 66,68 to indicate whether the signal 22 is verified or not.

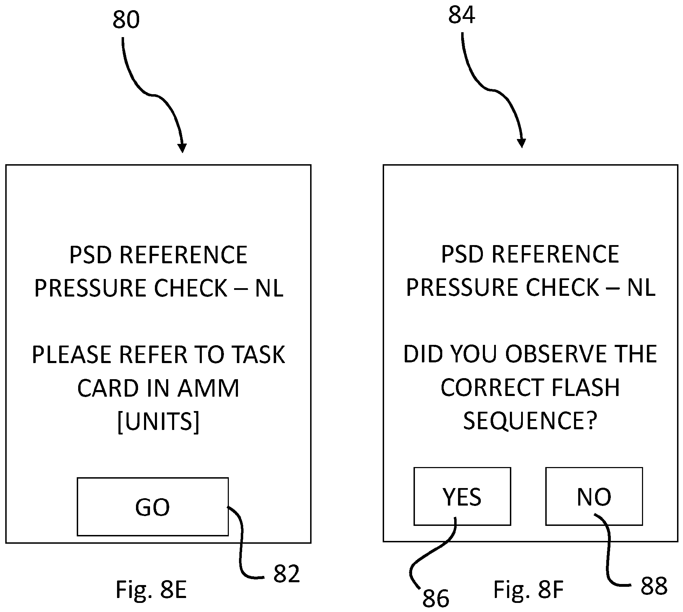

Similarly an exemplary user interface 70 for starting the check for the "tens" digit is shown in Figure 8C, with the user 24 interacting with user interface element 72 to start the check for the "tens" digit. An exemplary user interface 74 for a user 24 to verify the signal 22 for the "tens" digit is shown in Figure 8D, with the user 24 interacting with user interface elements 76,78 to indicate whether the signal 22 is verified or not. An exemplary user interface 80 for starting the check for the "units" digit is shown in Figure 8E, with the user 24 interacting with user interface element 82 to start the check for the "units" digit. An exemplary user interface 84 for a user to verify the signal 22 for the "units" digit is shown in Figure 8F, with the user 24 interacting with user interface elements 86,88 to indicate whether the signal 22 is verified or not.

Once the desired configuration data 20 has been verified for the first tire pressure monitoring device 10, the user can move to the next tire pressure monitoring device 202,204,206,208,210 for configuration to take place in the same manner described above.

By transitioning the tire monitoring devices 10,202,204,206,208,210 between the configuration and operational modes in response to a change in pressure sensed by the pressure sensor 19, the need to send an electronic signal to trigger such a transition between modes may be obviated.

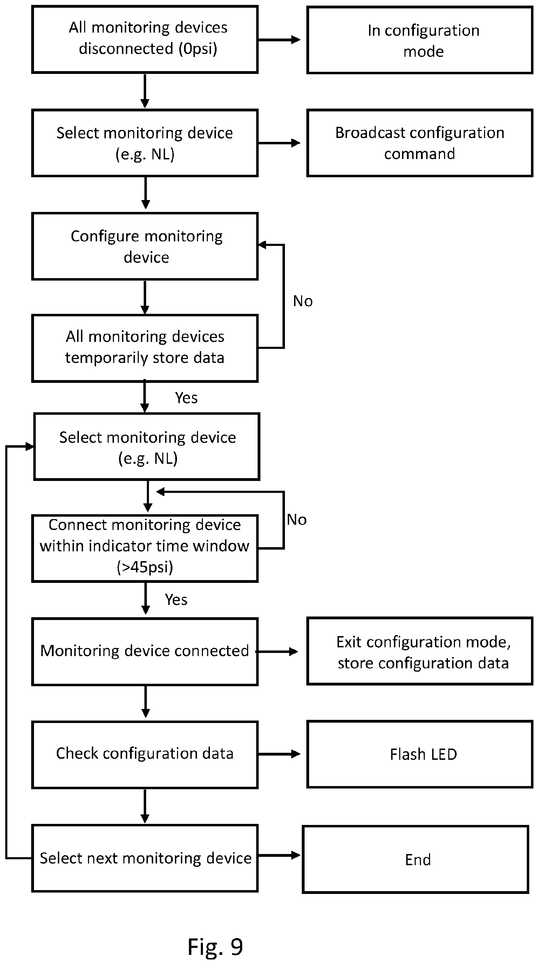

An alternative method of configuring the tire monitoring devices 10,202,204,206,208,210 is illustrated in the flow diagram of Figure 9.

Here, instead of the tire pressure monitoring devices 10,202,204,206,208,210 initially being installed on their respective tires on the aircraft 100, the tire pressure monitoring devices 10,202,204,206,208,210 are initially disconnected from their respective tires, such that the pressure sensor 19 senses a pressure of around 0psi. The tire pressure monitoring devices 10,202,204,206,208,210 are in their configuration modes.

The user 24 approaches the first tire pressure monitoring device 10 to begin configuration. The user 24 selects, on the untrusted device 32, that the first tire pressure monitoring device 10 is to be configured. The untrusted device 32 broadcasts a configuration command that is used to establish communication with the first tire pressure monitoring device 10.

The user 24 inputs the desired configuration data 20 for the first tire pressure monitoring device 10, including the wheel location and reference pressure, into the untrusted device 32. The configuration data 20 is then transferred from the untrusted device 32 to the first tire pressure monitoring device 10 via a Bluetooth ^{®} low energy protocol using the second transceiver 17. In other examples the configuration data 20 is transferred from the untrusted device 32 to the first tire pressure monitoring device 10 via a near field communication protocol using the first transceiver 15.

The configuration data 20 is held temporarily in the memory 14. Once the configuration data 20 has been transferred to the first tire pressure monitoring device 10, the user 24 performs the same process for the remaining tire pressure monitoring devices 202,204,206,208,210.

With the configuration data 20 installed on the tire pressure monitoring devices 10,202,204,206,208,210, the tire pressure monitoring devices 10,202,204,206,208,210 can be individually installed on the aircraft 100. When it is desired to install the first tire pressure monitoring device 10, the user 24 selects, on the untrusted device 32, that the first tire pressure monitoring device 10 is to be installed. The untrusted device 32 broadcasts a configuration command that is used to establish communication with the first tire pressure monitoring device 10.

In response to the configuration command, the LED 18 is illuminated green for a time window of around 30 seconds. It will be appreciated that other colours and time windows are also envisaged. If the user 24 does not install the first tire pressure monitoring device 10 within the time window of illumination, then the pressure sensor 19 does not sense a change in pressure, and the first tire pressure monitoring device 10 remains in its configuration mode. The user 24 then has to reattempt installation of the first tire pressure monitoring device 10 within a further period of illumination of the LED 18 by repeating the relevant part of the process described above.

If the user 24 installs the first tire pressure monitoring device 10 within the time window of illumination, then the pressure sensor 19 senses an increase in pressure to above the threshold value of 45psi, and the configuration data 20 is fully stored in the memory 14, and the first tire pressure monitoring device 10 exits its configuration mode and enters its operational mode. Thus a change in pressure sensed by the pressure sensor 19 is again utilised to transition the first tire monitoring device 10 between its configuration and operational modes.

The installation procedure described above can be repeated for each of the remaining tire pressure monitoring devices 202,204,206,208,210, with the user checking the stored configuration data 20 after configuring each respective tire pressure monitoring device 10,202,204,206,208,210.

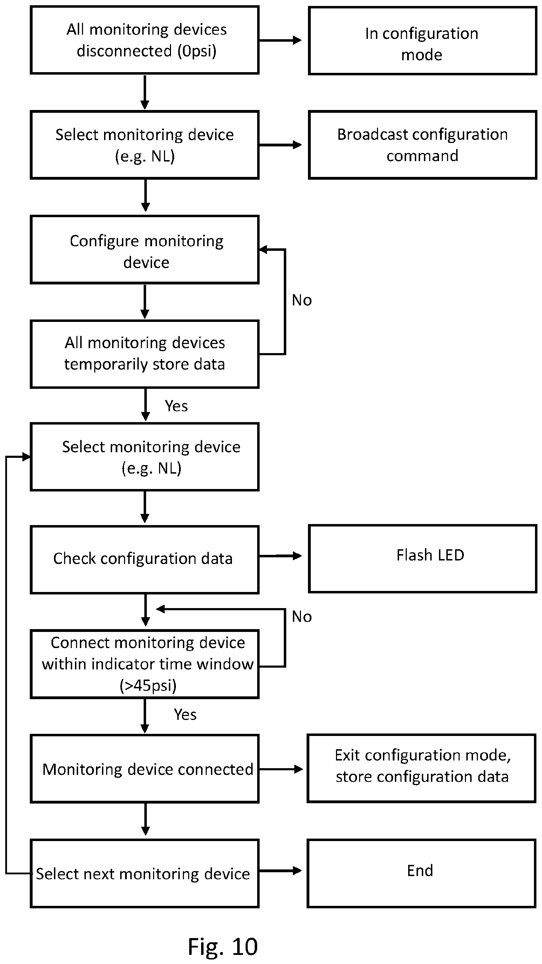

A modified version of the method of Figure 9 is shown in the flow diagram of Figure 10.

Here the tire pressure monitoring devices 10,202,204,206,208,210 are initially disconnected from their respective tires, such that the pressure sensor 19 senses a pressure of around 0psi, and the tire pressure monitoring devices 10,202,204,206,208,210 are in their configuration modes.

The user 24 approaches the first tire pressure monitoring device 10 to begin configuration. The user 24 selects, on the untrusted device 32, that the first tire pressure monitoring device 10 is to be configured. The untrusted device 32 broadcasts a configuration command that is used to establish communication with the first tire pressure monitoring device 10.

The user 24 inputs the desired configuration data 20 for the first tire pressure monitoring device 10, including the wheel location and reference pressure, into the untrusted device 32. The configuration data 20 is then transferred from the untrusted device 32 to the first tire pressure monitoring device 10 via a Bluetooth ^{®} low energy protocol using the second transceiver 17. In other examples the configuration data 20 is transferred from the untrusted device 32 to the first tire pressure monitoring device 10 via a near field communication protocol using the first transceiver 15.

The configuration data 20 is held temporarily in the memory 14. Once the configuration data 20 has been transferred to the first tire pressure monitoring device 10, the user 24 performs the same process for the remaining tire pressure monitoring devices 202,204,206,208,210. These steps can be performed remotely from the aircraft 100, such as ay a maintenance workshop or the like.

With the configuration data 20 installed on the tire pressure monitoring devices 10,202,204,206,208,210, the tire pressure monitoring devices 10,202,204,206,208,210 can be individually installed on the aircraft 100. When it is desired to install the first tire pressure monitoring device 10, the user 24 checks the temporarily stored configuration data 20 in the memory 14 of the first tire pressure monitoring device 10 using the steps described in relation to Figure 4.

The user then selects, on the untrusted device 32, that the first tire pressure monitoring device 10 is to be installed. The untrusted device 32 broadcasts a configuration command that is used to establish communication with the first tire pressure monitoring device 10.

In response to the configuration command, the LED 18 is illuminated green for a time window of around 30 seconds. It will be appreciated that other colours and time windows are also envisaged. If the user 24 does not install the first tire pressure monitoring device 10 within the time window of illumination, then the pressure sensor 19 does not sense a change in pressure, and the first tire pressure monitoring device 10 remains in its configuration mode. The user 24 then has to reattempt installation of the first tire pressure monitoring device 10 within a further period of illumination of the LED 18 by repeating the relevant part of the process described above.

If the user 24 installs the first tire pressure monitoring device 10 within the time window of illumination, then the pressure sensor 19 senses an increase in pressure to above the threshold value of 45psi, and the configuration data 20 is fully stored in the memory 14, and the first tire pressure monitoring device 10 exits its configuration mode and enters its operational mode. Thus a change in pressure sensed by the pressure sensor 19 is again utilised to transition the first tire monitoring device 10 between its configuration and operational modes.

The installation procedure described above can be repeated for each of the remaining tire pressure monitoring devices 202,204,206,208,210.

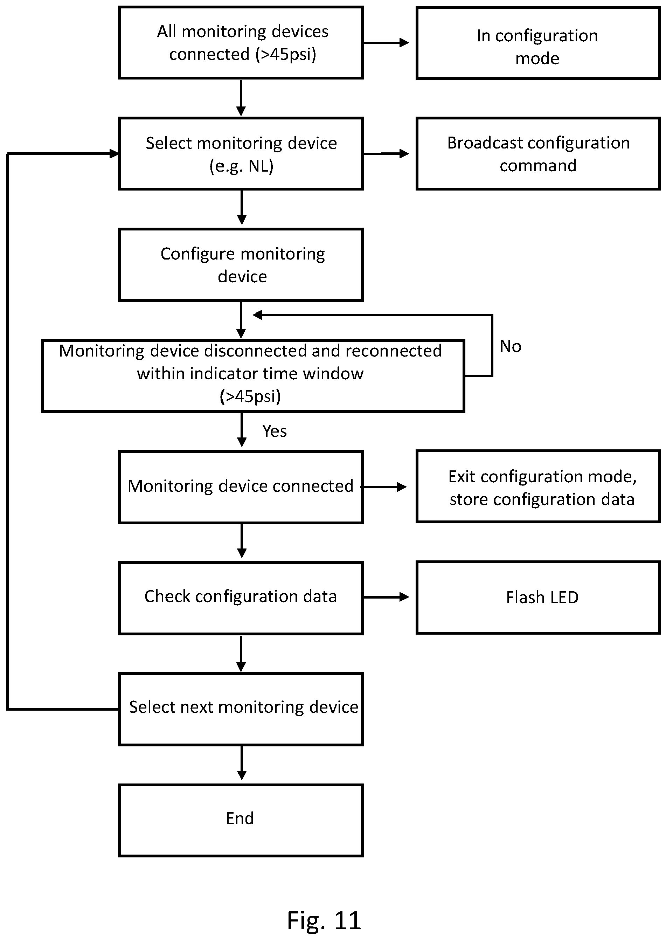

A further alternative method of configuring the tire monitoring devices 10,202,204,206,208,210 is illustrated in the flow diagram of Figure 11.

Initially, the tire pressure monitoring devices 10,202,204,206,208,210 are installed on their respective tires on the aircraft 100. The pressure sensor 19 of each tire pressure monitoring device 10,202,204,206,208,210 senses the pressure of the respective tire, which is typically around 178psi, and above a threshold value of 45psi. The tire pressure monitoring devices 10,202,204,206,208,210 are in their configuration modes.

The user 24 approaches the first tire pressure monitoring device 10 to begin configuration. The user 24 selects, on the untrusted device 32, that the first tire pressure monitoring device 10 is to be configured. The untrusted device 32 broadcasts a configuration command that is used to establish communication with the first tire pressure monitoring device 10.

The user 24 inputs the desired configuration data 20 for the first tire pressure monitoring device 10, including the wheel location and reference pressure, into the untrusted device 32. The configuration data 20 is then transferred from the untrusted device 32 to the first tire pressure monitoring device 10 via a Bluetooth ^{®} low energy protocol using the second transceiver 17. In other examples the configuration data 20 is transferred from the untrusted device 32 to the first tire pressure monitoring device 10 via a near field communication protocol using the first transceiver 15.

Once the configuration data 20 has been transferred to the first tire pressure monitoring device 10, the LED 18 is illuminated blue for a time window of around one minute. It will be appreciated that other colours and time windows are also envisaged. If the user 24 does not disconnect and reconnect the first tire pressure monitoring device 10 within the time window of illumination, then the pressure sensor 19 does not sense a decrease and subsequent increase in pressure, and the first tire pressure monitoring device 10 remains in its configuration mode. The user 24 then has to reattempt configuration of the first tire pressure monitoring device 10 within a further period of illumination of the LED 18 by repeating the relevant part of the process described above.

If the user 24 disconnects and reconnects the first tire pressure monitoring device 10 within the time window of illumination, then the pressure sensor 19 senses a decrease and a subsequent increase in pressure to above the threshold value of 45psi, and the configuration data 20 is fully stored in the memory 14, and the first tire pressure monitoring device 10 exits its configuration mode and enters its operational mode. Thus a change in pressure sensed by the pressure sensor 19 is again utilised to transition the first tire monitoring device 10 between its configuration and operational modes.

The installation procedure described above can be repeated for each of the remaining tire pressure monitoring devices 202,204,206,208,210, with the user checking the stored configuration data 20 after configuring each respective tire pressure monitoring device 10,202,204,206,208,210.

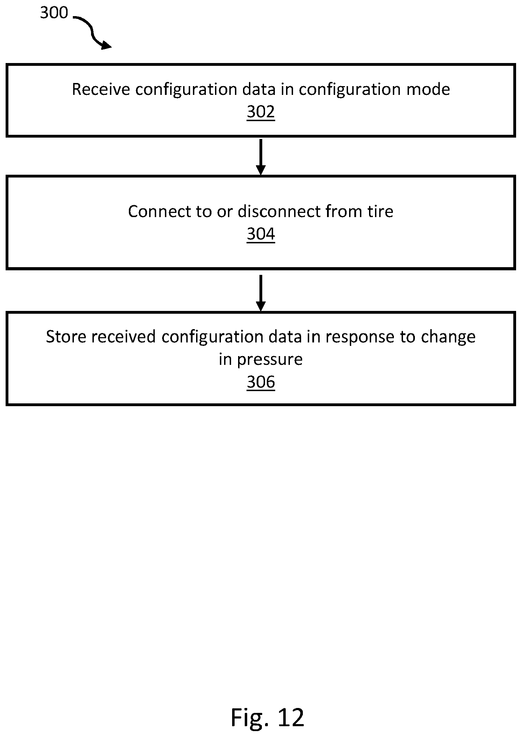

In each of the methods described above, e.g. those of Figures 4, 9, 10, and 11, a change in pressure sensed by the pressure sensor 19 is used to transition the tire pressure monitoring devices 10,202,204,206,208,210 between their configuration and operational modes. A method in accordance with this is illustrated in Figure 12. The method 300 comprises receiving 302, at the tire monitoring device 10,202,204,206,208,210, configuration data 20 when the tire monitoring device 10,202,204,206,208,210 is in a configuration mode. The method 300 comprises connecting 304 the tire monitoring device 10,202,204,206,208,210 to, or disconnecting the tire monitoring device 10,202,204,206,208,210 from, a tire such that the pressure sensor 19 senses a change in pressure. The method 300 comprises storing 306 the received configuration data 20 in the memory 14 in response to the sensed change in pressure.

Once installed, and configured, secure communication may be set-up amongst the tire pressure monitoring devices 10,202,204,206,208,210, for example by exchange of appropriate cryptographic parameters. Details of how the secure communication is set-up will not be described for the sake of brevity, and it will be appreciated by a person skilled in the art that there are many ways in which secure communication can be set-up in the network 200 of tire pressure monitoring devices 10,202,204,206,208,210. Once secure communication is established, the tire pressure monitoring devices 10,202,204,206,208,210 can communicate amongst themselves securely using encryption so that messages cannot be easily read and/or modified by other devices.

Once secure communication has been established, subsequent tire pressure checks can be performed. In one example, the user 24 initiates a tire pressure check at any of the tire pressure monitoring devices 10,202,204,206,208,210. Each tire pressure monitoring device 10,202,204,206,208,210 communicates with each other tire pressure monitoring device 10,202,204,206,208,210, with configuration data 20 transferred between the tire pressure monitoring devices 10,202,204,206,208,210.

Each tire pressure monitoring device 10,202,204,206,208,210 checks that it is the only one with a particular stored location in configuration data 20, and that the network 200 of tire pressure monitoring devices 10,202,204,206,208,210 is complete, i.e. that there are six tire pressure monitoring devices 10,202,204,206,208,210.

Each tire pressure monitoring device 10,202,204,206,208,210 also compares its stored reference pressure in configuration data 20 with the stored reference pressure in configuration data of other tire pressure monitoring devices 10,202,204,206,208,210 within the same group 102,104. For example, the first 10 and second 202 tire pressure monitoring devices compare their stored reference pressures, and the third 204 through sixth tire pressure monitoring devices compare their stored reference pressures.

Where any of the above-mentioned checks fail, for example where there is more than one tire pressure monitoring device 10,202,204,206,208,210 with the same stored location, where the network 200 is incomplete, or where reference pressures within the first group 102 or within the second group 104 do not match, an error signal is transmitted by the tire pressure monitoring devices 10,202,204,206,208,210. In some examples the error message comprises a flash of the LED 18, for example over an extended period of time. In one particular example, a red flash of the LED 18 may indicate an error message.

Where the above-mentioned checks are successfully completed, with all criteria met, the tire pressure monitoring devices 10,202,204,206,208,210 each compare their sensed tire pressure with their stored reference pressure. Where the sensed tire pressures all match the respective stored reference pressures, the LED 18 of each tire pressure monitoring device 10,202,204,206,208,210 is illuminated green to indicate that the sensed tire pressures are acceptable. Where any of the sensed tire pressures do not match the respective stored reference pressures, the LED 18 of each tire pressure monitoring device 10,202,204,206,208,210 is illuminated red to indicate that the sensed tire pressures are not acceptable. For example, the methods described in EP 33498501A1, incorporated herein by reference, can be used to enable tire pressure monitoring devices to all indicate that tire pressures are not acceptable when one or more of the tire pressure monitoring devices determine that the sensed pressure is not acceptable. The sensed tire pressures may then be transmitted offline such that appropriate action, for example inflation or replacement of a tire, can be taken.

Additionally or alternatively to the tire pressure monitoring devices 10,202,204,206,208,210 checking the stored reference pressures amongst themselves during a tire pressure check, the tire pressure monitoring devices 10,202,204,206,208,210 may communicate the configuration data 20, and hence the stored reference pressures, amongst themselves once secure communication has been established, for example as part of a check of correct loading of the configuration, or even during establishment of secure communication, for example as part of generating and/or exchanging secure keys. In such circumstances, the tire pressure monitoring devices 10,202,204,206,208,210 may directly or indirectly check the stored reference pressures amongst themselves, with an error being indicated by any of the tire pressure monitoring devices 10,202,204,206,208,210 where appropriate stored reference pressures do not match.

From the above, it can be seen that the configuration data 20 may be useful in ensuring correct operation of the tire pressure monitoring devices 10,202,204,206,208,210, and of the network 200. By transitioning the tire monitoring devices 10,202,204,206,208,210 between the configuration and operational modes in response to a change in pressure sensed by the pressure sensor 19, the user 24 may be directly placed in the configuration process, which may provide enhanced security during configuration when compared to a system where solely electronic means are utilised to store the configuration data 20 in the memory 14.

It is to noted that the term "or" as used herein is to be interpreted to mean "and/or", unless expressly stated otherwise.

## Claims

1. A tire monitoring device comprising:
a pressure sensor;
a controller; and
a memory;
wherein the controller is configured to control the tire monitoring device to selectively be in a configuration mode, in which the tire monitoring device is open to receiving configuration data, and an operational mode, in which received configuration data is stored in the memory and the tire monitoring device cannot receive further configuration data, and the controller is configured to transition the tire monitoring device between the configuration mode and the operational mode in response to a change in pressure sensed by the pressure sensor.

2. The tire monitoring device according to Claim 1, wherein the controller is configured to transition the tire monitoring device from the configuration mode to the operational mode in response to an increase in pressure sensed by the pressure sensor.

3. The tire monitoring device according to Claim 1 or Claim 2, wherein the controller is configured to transition the tire monitoring device from the configuration mode to the operational mode in response to the pressure sensed by the pressure sensor increasing to above a threshold pressure value, optionally wherein the threshold pressure value is at least 45psi.

4. The tire monitoring device according to Claim 3, wherein the controller is configured to transition the tire monitoring device from the configuration mode to the operational mode where the pressure sensed by the pressure sensor is above the threshold pressure value for at least a pre-determined time period.

5. The tire monitoring device according to any one of the preceding claims, wherein the tire monitoring device comprises an indicator configured to provide an indication to an operator, and the controller is configured to transition the tire monitoring device from the configuration mode to the operational mode in response to an increase in pressure sensed by the pressure sensor whilst the indicator is providing the indication, optionally wherein the indicator is configured to provide the indication in response to an indicator start signal, and the indicator is configured to provide the indication for a time window following the indicator start signal.

6. The tire monitoring device according to Claim 5, wherein the indicator comprises a light source, and the controller is configured to transition the tire monitoring device from the configuration mode to the operational mode in response to an increase in pressure sensed by the pressure sensor whilst the light source is illuminated.

7. The tire monitoring device according to Claim 5 or Claim 6, wherein the controller is configured to maintain the tire monitoring device in the configuration mode if no increase in pressure is sensed by the pressure sensor whilst the indicator is providing the indication.

8. The tire monitoring device according to any of one of Claims 5 to 7, wherein the controller is configured to control the indicator to, in the operational mode and in response to receipt of a request to confirm the configuration data stored in the memory, transmit a configuration data signal that encodes the received configuration data stored in the memory.

9. The tire monitoring device of any one of the preceding claims, wherein the tire monitoring device comprises an aircraft tire monitoring device.

10. An aircraft comprising a tire monitoring device as claimed in any preceding claim.

11. A method of configuring a tire monitoring device comprising a pressure sensor and a memory, the method comprising:
receiving, at the tire monitoring device, configuration data when the tire monitoring device is in a configuration mode;
connecting the tire monitoring device to, or disconnecting the tire monitoring device from, a tire such that the pressure sensor senses a change in pressure; and
storing the received configuration data in the memory in response to the sensed change in pressure.

12. The method according to Claim 11, wherein the method comprises:
connecting the tire monitoring device to the tire such that the pressure sensor senses an increase in pressure; and
storing the received configuration data in the memory in response to the sensed increase in pressure, optionally wherein the method comprises receiving the configuration data when the tire monitoring device is not connected to the tire.

13. The method according to Claim 12, wherein the method comprises storing the received configuration data in the memory in response to the pressure sensed by the pressure sensor increasing to above a threshold pressure value, optionally wherein the method comprises storing the received configuration data in the memory where the pressure sensed by the pressure sensor is above the threshold pressure value for at least a pre-determined time period.

14. The method according to any one of Claims 11 to 13, wherein the tire monitoring device comprises an indicator, and the method comprises providing an indication to an operator using the indicator, and storing the received configuration data in the memory in response to an increase in pressure sensed by the pressure sensor whilst the indicator is providing the indication, optionally wherein the method comprises receiving, at the tire monitoring device, a request to confirm the received configuration data stored in the memory, and transmitting, using the indicator, a configuration data signal that encodes the received configuration data stored in the memory.

15. A data carrier comprising machine readable instructions for the operation of one or more processors of a controller of a tire monitoring device comprising a pressure sensor and a memory, which, when executed, cause the controller to:
control the tire monitoring device to be in a configuration mode, in which the tire monitoring device is open to receiving configuration data;
control the tire monitoring device to be an operational mode, in which received configuration data is stored in the memory and the tire monitoring device cannot receive further configuration data; and
transition the tire monitoring device between the configuration and operational modes in response to a change in pressure sensed by the pressure sensor.
